# EUROPEAN PATENT APPLICATION

(11) **EP 4 390 391 A1**
(43) Date of publication of application: **26.06.2024**
(21) Application number: 23158874.0
(22) Date of filing: 11.04.2023
(51) Int. Cl.: G01N 30/86, G01N 30/88

(54) **METHOD FOR DETERMINING PEAK CHARACTERISTICS ON ANALYTICAL DATA SETS**

(30) Priority: 19.12.2022 EP 22214727
(71) Applicant: Ares Trading S.A., 1170 Aubonne (CH)
(72) Inventor: SATWEKAR, Abhijeet, 00012 Guidonia Montecelio (IT); PANDA, Anubhab, 560095 Koramangala, Bangalore (IN); NANDULA, Phani, 560095 Koramangala, Bangalore (IN); SRIPADA, Sriharsha, 560095 Koramangala, Bangalore (IN); GOVINDARAJ, Ramachandiran, 560095 Koramangala, Bangalore (IN)
(74) Representative: Merck Serono S.A. Intellectual Property

(57) **Abstract**

Provided herein are solutions to improve peak integration for example chromatographic processes using a method which includes elements of artificial intelligence to process the integration of peaks in the chromatographic profiles, as generated from the analytical assays used in the quality testing of therapeutic products. The method of the present invention in chromatographic peak integrations develops a solution for enabling digitalization within the areas of real-time release testing, automated quality control, process analytical technologies, and continuous manufacturing.

## Description

### Field of the Invention.

The invention is directed to methods for analyzing data in a computer implemented method to determine peak characteristics in an analytical data set.

### Background of the Invention.

Over the past years, the healthcare manufacturing sector has evolved through the advancements of the industrial revolutions. One such industrial revolution brought digitalization using computers and communication networks for more sophisticated control strategies towards higher productivity and enhanced product quality. Ongoing modernization aims to build on the previous revolutions by connecting cyber-physical systems for fully autonomous data-driven adaptive and predictive control to deliver advanced manufacturing. Thus, envisioning a highest degree of digitalization, automation, virtualization, and decentralization, and with a massive impact on the economic, environmental, and social aspects of sustainability. Such pursuit in the healthcare industries, necessitates the translation of the analog information into digital format as "digitization", with the subsequent use of information technology (IT) platforms i.e. Cloud Computing, Artificial Intelligence, Big Data, Internet of Things, 3D Printing, and Blockchain as digital technologies to enable the business and operational processes as "digitalization". Digital transformation within the pharmaceutical and biopharmaceutical industries has the potential to bring a radical change in the value creation of delivering high quality products with accelerated time to market, cost-effectiveness, operational efficiencies, flexibility and agility, regulatory compliance with increased safety and improved quality, and reduced wastes towards product recalls and consistent performance.

Pharmaceutical and biopharmaceutical industries rely on technological platforms that are established with intensive knowledge base and proven for its fit-for purpose to adhere with the regulatory compliance for the manufacturing of safe and effective products. Digital Innovations using the digital technologies are relatively new with higher degree of complexity, thus there is a lack of experience on the new digital technologies leading to uncertainty on the regulatory oversight for adoptions in the manufacturing processes of therapeutic products. The U.S. Food and Drug Administration (FDA) has dedicated efforts in the past several years to accelerate the adoption of advanced manufacturing technologies, by the establishment of research and regulatory programs - to update the regulatory process and guidance documents and to facilitate research publications on advanced manufacturing processes that can provide regulatory evidence of quality, safety and efficacy.

The healthcare industries are exploring a multitude of emerging digital technologies to bring about digital innovations including through artificial intelligence (AI) and big data across the entire healthcare value chain. AI is bringing transformation of the operational processes of healthcare manufacturing in the areas of drug discovery and development, visual inspections of packaging, condition-based maintenance of pharmaceutical manufacturing systems, enhanced data integrity and quality assurance, predictive production process, and many more emerging areas.

Within the biomanufacturing, the operation process of Quality Control (QC) is of paramount importance to test product quality for ensuring the safety and efficacy. Healthcare industries have established processes as "pharmaceutical quality system" to monitor and test the product quality with various analytical techniques according to the standardized and validated procedures for ascertaining the specifications of the therapeutic product.

Among the various analytical techniques, chromatography-based methods are largely adopted to determine the qualitative and quantitative analysis of the components/attributes in the therapeutic product. The product testing with chromatographic methods involves sample preparation, physical separation of components, sensor data acquisition as a function of signal change along the time, chromatographic peak data processing and interpretation of the data. These operations are performed by adhering to regulatory and compliance guidelines - Current Good Manufacturing Practices (CGMPs) with clear and concise documentation.

The integration of the chromatographic peaks generates values indicative of product quality, and therefore the integration process must be scientifically sound, justified and comprehensively documented to ensure the reliability of the analytical results. Manual and automatic peak integration options are available in commercial software's to detect the peak start and end, connect the baseline between start and end points, and compute the peak area and height. Waters Empower software provides two options to automatically integrate peaks, a) traditional integration algorithms - detect the peak considering the rise of the baseline in the chromatographic profile, and the integration method is optimized by setting the values for peak width, intensity threshold, minimum area, and height. b) Apex track algorithm - detects the peak by identifying its apex through a 2nd derivative function and is based on measuring the curvature as defined by the rate of change of slope of the chromatogram. Through the Liftoff % and Touchdown % values, the baseline is determined irrespective of the apex peak detection. These algorithms are rule-based parametrizations to perform peak integration and cannot be automatically adapted to the highly heterogeneous and variable chromatographic profiles. The analytical runs possess an inherent variability encountered from the shift of retention times, non-gaussian peak shapes, and drifting baselines. This makes the rule-based automatic peak integration difficult to reproduce and apply on complex chromatographic profiles, that have co-elution or partially resolved peaks, excessive peak tailing, baseline and matrix interference, and non-linear trends. Thus, leading to incorrect peak identification by algorithm, with improper peak cuts and negative areas. Under such circumstances the manual integration is considered appropriate, provided that the manual process is consistent across all the test samples and performed with proper scientific justification and controlled protocol. However, manually adjusting the baseline may lead to bad falsification practices related to skimming (peak area is reduced) or enhancing (peak area is increased) to achieve the desired results. Chromatographic data processing has attracted attention on peak integration and interpretation of chromatogram through multiple FDA 483 citations and warning letters. This reflects a technological need for a robust, reproducible, and intelligent algorithm to understand the inherent variability and to perform the chromatographic peak integrations adhering to data integrity principles and compliance standards.

### Summary of the Invention.

This invention provides a solution to the above-described shortcomings by using a method which includes elements of artificial intelligence to process the integration of peaks in the chromatographic profiles, as generated from the analytical assays used in the quality testing of biotech products. The high complexity of the biotech chromatographic profiles and the current limitations of the integration software's were reasons for inaccuracies. The method of the present invention in chromatographic peak integrations develops a solution for enabling digitization within the areas of real-time release testing, automated quality control, process analytical technologies, and continuous manufacturing.

In one embodiment the present invention provides a computer implemented method for determining peak characteristics from analytical data sets comprising:
a. retrieving analytical data for 1 + q dimensions for p data sets obtained using the same analytical method,
b. extracting the analytical data in 1 dimensional signal data for each data set,
c. converting the 1-dimensional signal data into 2-dimensional array with n channels wherein the 2-dimensional array is in the form of a matrix,
d. normalizing the 2-dimensional array with n-channels which normalized 2-dimensional array with n-channels is collected in a database, and
e. identifying for a single data set the number of peaks in the analytical data and for each peak the peak value, start peak value and end peak value.

### Brief description of the Drawings.

The following is a brief description of the drawings:
Figure 1: shows a historical Dataset variability as observed for the retention time and peak start /end time for the methods a) SEC, b) IEX and c) GM.
Figure 2: shows error plots for RT in SEC dataset, as assessed for the randomly selected training set.
Figure 3: shows error plots for RT in SEC dataset, as assessed for the incremental training numbers in the order of time acquired data.
Figure 4: shows error plots for PS/PE in SEC dataset, as assessed for the incremental training numbers in the order of time acquired data.
Figure 5: shows error plots for RT and PS/PE in IEX and GM dataset, as assessed for the incremental training numbers in the order of time acquired data.

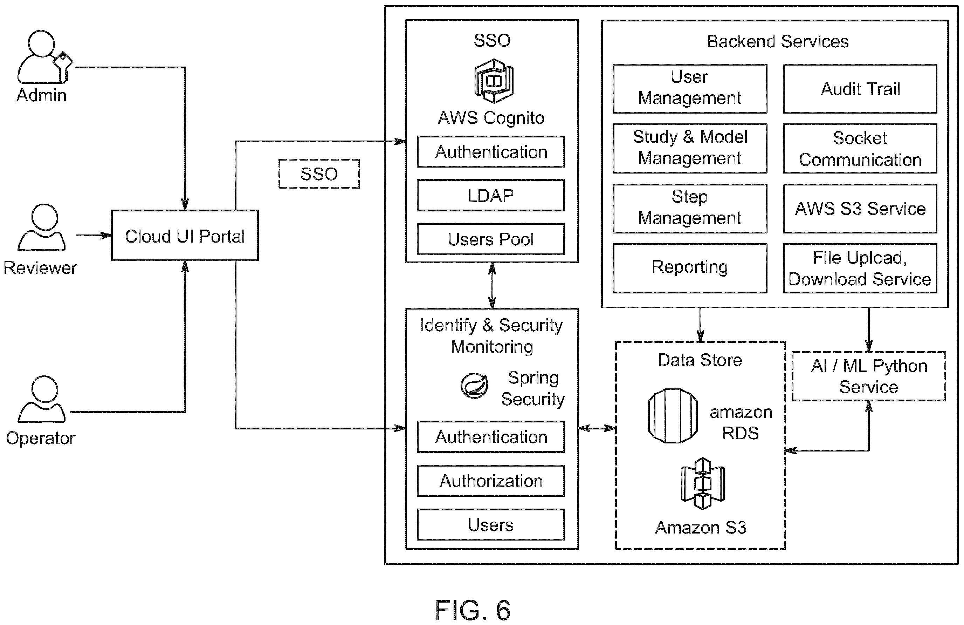

Figure 6: High-level architecture of the application.

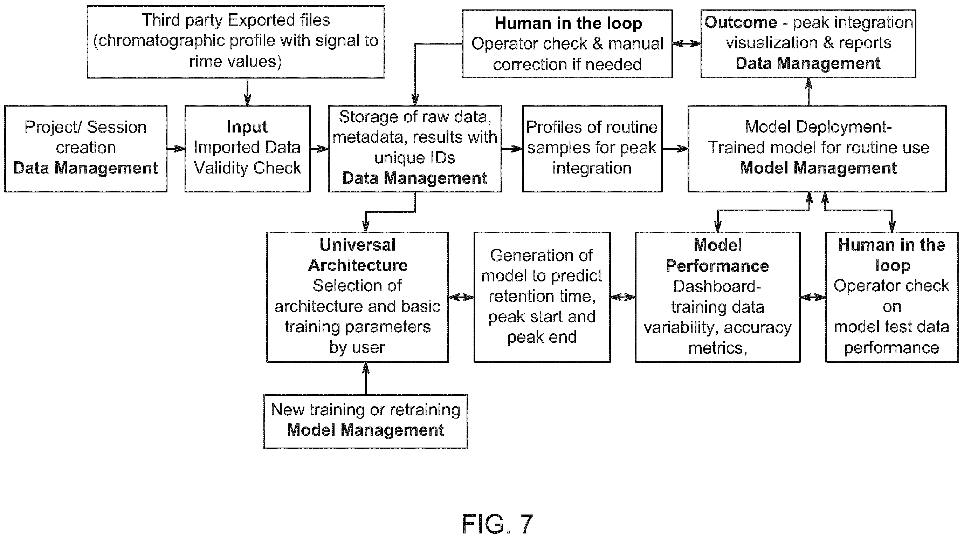

Figure 7: Representation of the operating modules within the application.
Figure 8: Shows a possible application hosting in AWS.
Figure 9: Schematic for a GxP framework for the AI based chromatographic peak integration.

### Detailed description of the Invention.

This invention provides a solution by using a method which includes elements of artificial intelligence to process the integration of peaks in the chromatographic profiles, as generated from the analytical assays used in the quality testing of therapeutic products. The high complexity of the chromatographic profiles of biologic products and the current limitations of the integration software's were reasons for inaccuracies of the peak integration process. The method of the present invention in chromatographic peak integrations develops a solution for enabling digitization within the areas of real-time release testing, automated quality control, process analytical technologies, and continuous manufacturing.

Examples of chromatographic techniques include size exclusion liquid chromatography, ion exchange liquid chromatography and hydrophilic interaction liquid chromatography. Furthermore, the application extends beyond such examples to be applicable on any dataset having an x- and y-axis to generate a peak profile. Size exclusion liquid chromatography (SEC) method is widely used as an analytical technique to separate the monomers, fragments, and aggregates in a monoclonal antibody product. These components are separated according to their sizes, as they pass through the column bed made of porous particles. The large sized components would elute faster than smaller sized components, due to the differences in penetration across the column pores i.e., smaller components penetrate more readily than the large components. Ion exchange liquid chromatography (IEX) method is widely used as an analytical technique to separate the protein components, on the basis of their charge in a monoclonal antibody product. The principle involves a coulombic interaction between ionic functional groups of a stationary phase (column matrix), and the oppositely charged analyte ions present on the components of monoclonal antibody product. IEX is performed in two modes that are based on the charge of the functional groups on the stationary phase i.e. cation exchange retains the positively charged ions, whereas the anion exchange retains the negatively charged ions. The composition of mobile phase determines the separation and elution of proteinaceous components as per their net charge. Most often, the weak cation exchange mode is performed to separate the acidic, basic, and main variants within the monoclonal antibody product. The elution of the components follows the order acidic - main - basic, that is due to their charge distribution as conferred from the post-translational modifications on the monoclonal antibody product. Numerous glycan analysis methods (GM) are widely used to determine the glycosylation within the monoclonal antibody products. Hydrophilic interaction liquid chromatography (HILIC) coupled to a florescence detector is one of the popular chromatography-based method, that is performed on the released and labelled glycans. HILIC provides the separation based on the hydrophilicity of the glycans, and the retention is corelative with the size of the glycan. The eluted profile provides the peaks of glycan components that are representative to the monoclonal antibody product. High (HPLC) or Ultra (ULPC) performance liquid chromatography systems are used to run the chromatography-based SEC, IEX and GM methods and the signal is acquired with a detector system (Ultraviolet or fluorescence). Elution of the components is passed through a detector to record the signals, thus translating into a representation of peaks as per the time series of component elution. These peaks are further integrated by horizontally connecting the peak start and peak end points on the baseline and then with vertical drop lines to separate the identity as per the resolution of closely eluting components. Finally, the integration provides the proportion of each component and their retention times, which are indicative of their identity and distribution. Therefore, the Retention Time (RT) and the Peak start / end times (PS/PE) are important variables to integrate the peaks and compute the distribution of the components.

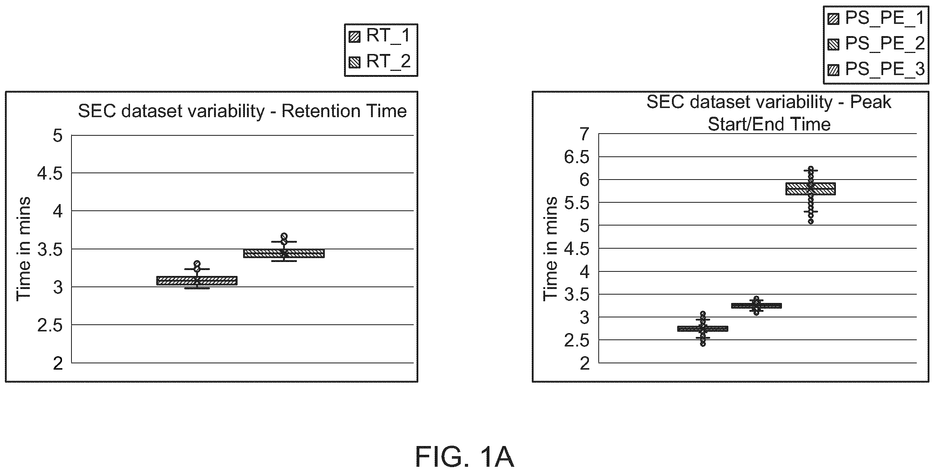

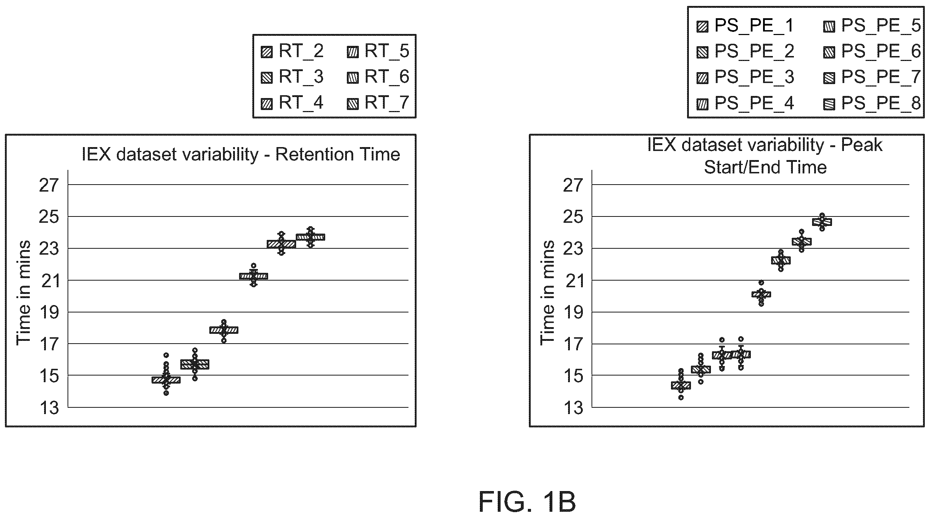

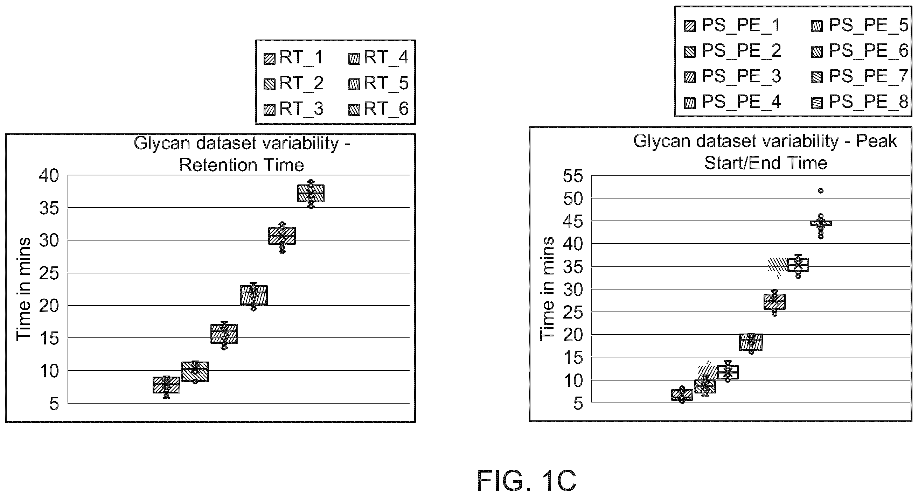

The data sets for training the computer implemented method can be different of such chromatographic profiles for example SEC, IEX and GM chromatographic profiles. SEC profile is regarded as simple, as it involves a smaller number of peaks. However, the analytical variability can bring difficulty in integrating these profiles with consistency. The SEC dataset contained the consistent profiles belonging to standard, as well as stressed material profiles that has variations in the distribution level of the components. Thus, the SEC dataset represented a realistic data source that bears historical analytical variability, along with the differences in the proportion of the components. Similarly, IEX has medium to complex level of complexity for the peak integration, due to presence of more peaks and analytical variability of the technique. And the GM dataset was the representative case for the most complex profile, due to the presence of numerous peaks, and highly sensitive analytical method that is prone to high variabilities. Thus, the datasets are representatives of different chromatographic separation principles, varying level of complexities with respect to the number of peaks and separation resolution, and differences in analytical method sensitivity and variability. Observations from the historical dataset variability (Figure 1, as assessed from the manually integrated chromatographic profiles) indicated that, in terms of maximum shifts the SEC has the lowest variability for RT (0.3 mins), and PS/PE (1.2 mins), and GM has the highest variability for RT (4.2 mins) and PS/PE (4.9 mins). Although, one PS/PE data point with GM was observed at 50.5 mins, this was considered an outlier and excluded. While IEX showed a medium variability for RT (2.3 mins) and PS/PE (1.9 mins). Of note, the IEX RT numbering starts at RT 2, this was due to the inconsistent presence of very low intensity peak 1. Therefore, it was excluded. However, the peak start / end was kept for assessing the overall shifts.

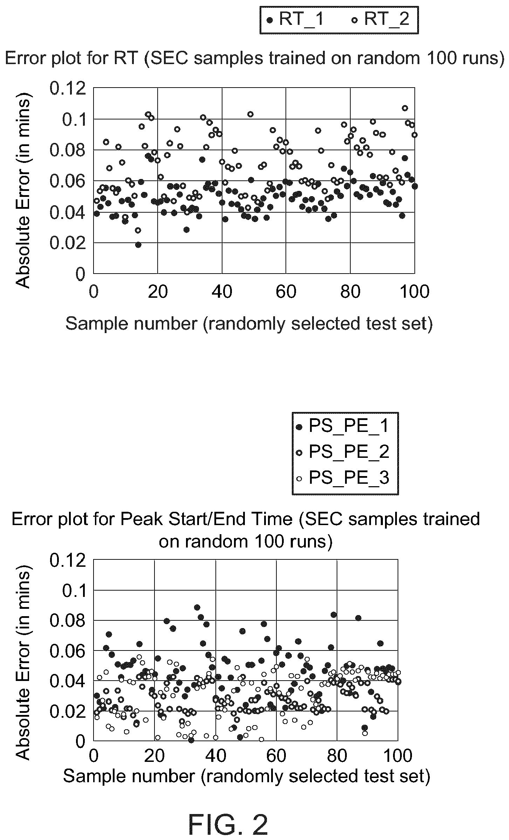

To address the fact that algorithms are capable to integrate chromatographic peaks consistently, with minimal training data set, for example SEC dataset can be used to optimize the initial architecture that is capable to work with less amount of data. Here a deep learning architecture than was developed and trained with 100 randomly chosen dataset from the 1550 runs. The absolute error observed within the test set for the RT and PS/PE was within 0.1 mins (Figure 2). This provided a strong confidence on the artificial intelligence (Al) technology for the chromatographic peak integration process using only 100 datasets for the training of the model. Generally, deep learning approaches demand high volumes of training data to provide an acceptable accuracy in the predictions. The algorithm herein was able to capture well the features from less data, and we performed various checks on the model overfitting by a) tracking the Loss values for training & validation set versus the epochs, b) monitoring the comparability of Max absolute error between the training and test samples, c) testing the predictive performance of the model on unseen test data, and d) k-fold walk forward cross validation to check the performance of the model on different sets of data. These checks confirmed no overfitting of the model and validating the model performance, that was trained with less number of data. The random selection of data covered the expected overall analytical variability of the SEC method, and this was incorporated in the learning of the AI model. Thus, clearly demonstrating the higher performance and its capability to adapt for accurate integration of chromatographic peaks. Thus herein provided is superior performance in comparison to the existing peak integration approaches.

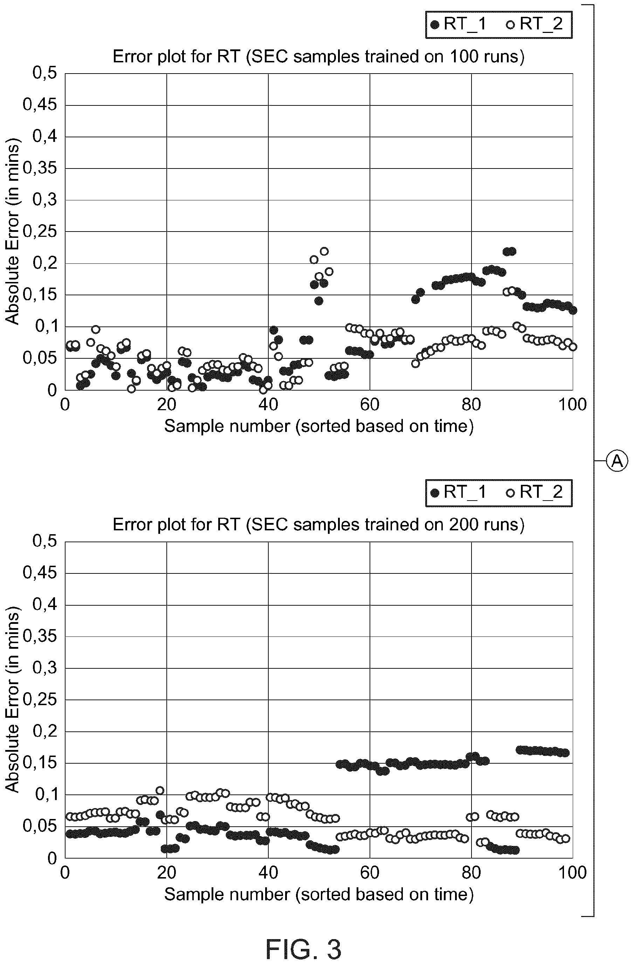

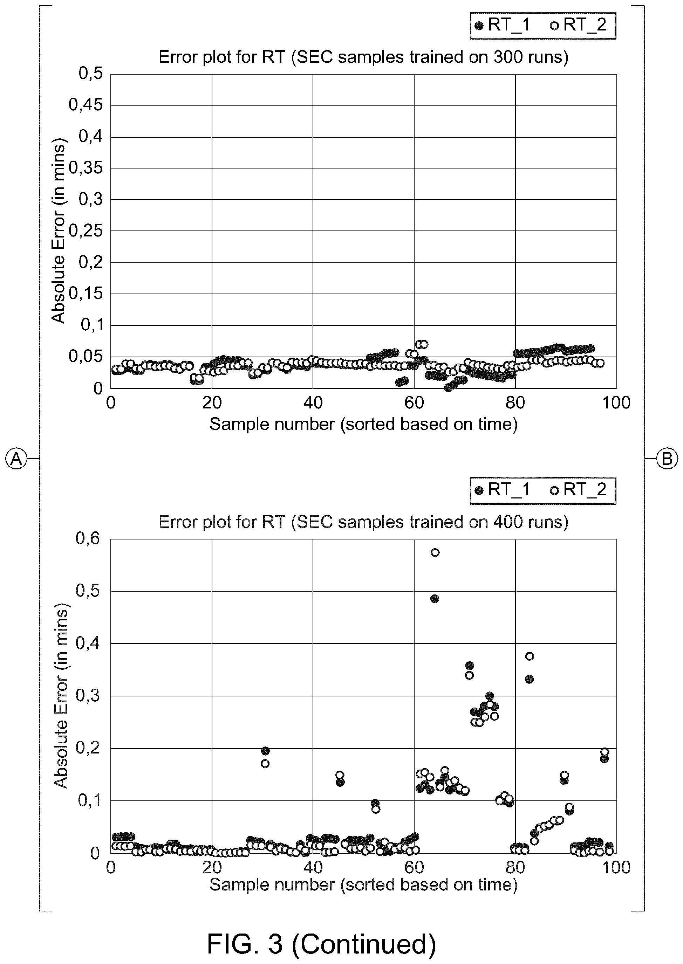

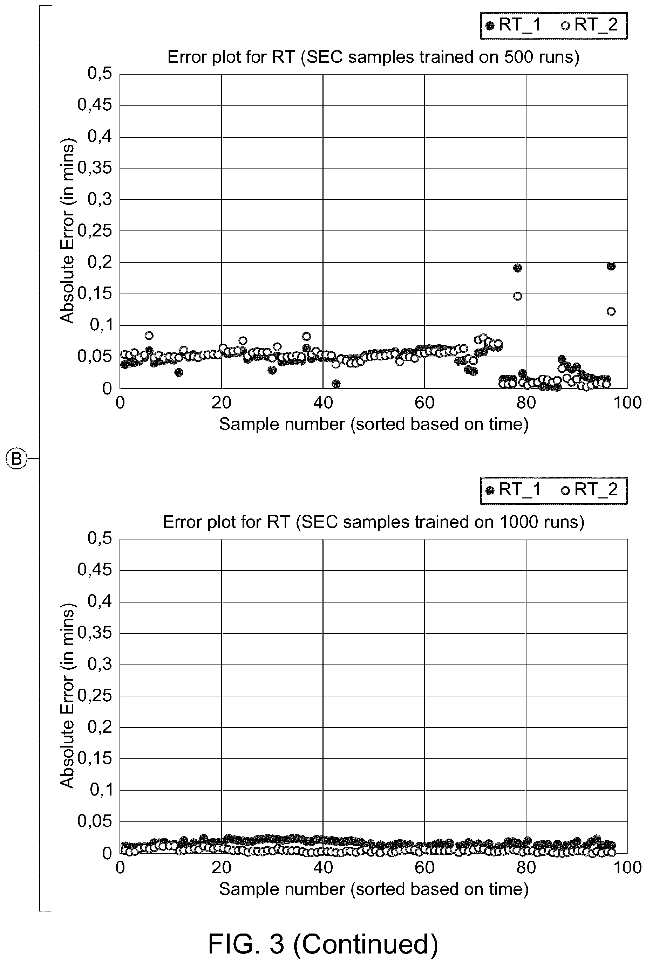

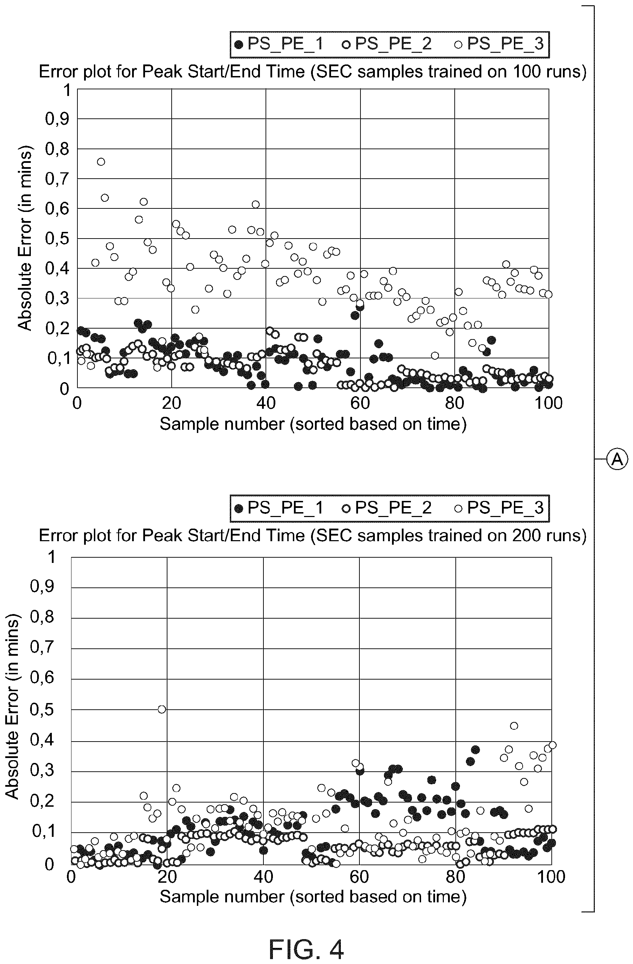

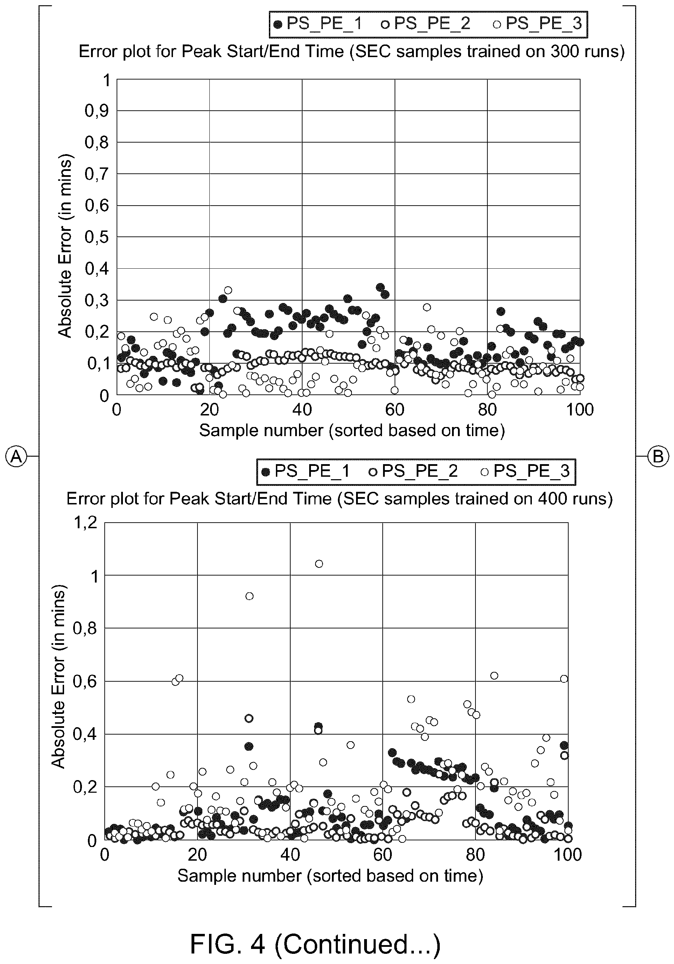

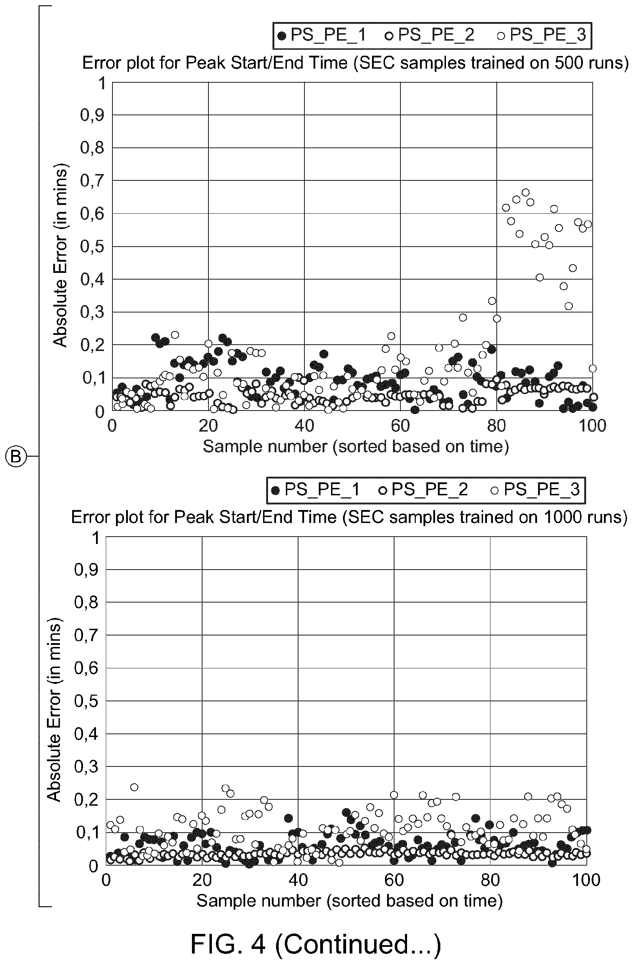

During the development of new analytical chromatographic methods and its peak integration process, large datasets are not initially available, as well as the analytical variability is not fully known. The analytical variability evolves during the routine use of analytical method. Hence, for understanding the model performance on the evolving analytical variability of the chromatographic profiles. Herein training sets were defined based on the time course of the run/data acquisition. The SEC dataset was organized as per its date and time of acquisition, and batches of 100 datasets were chosen to train the AI model and test its performance on the next time aligned set of data. This approach provided a realistic environment of the business operational process, to test the performance of the AI model. The SEC dataset consisted of large number of data comprising of different analytical sessions, instrumentation, standard and stressed profiles (containing variations in the analyte distributions). The SEC AI model was trained with initial 100 datasets organized as per the time series of data acquisition and then tested on the subsequent 100 datasets. Then, the later 100 datasets were incorporated into the AI model by retraining and tested on the other 100 datasets in the time series. This process was performed till all the available dataset were utilized. Thus, training, and retrained batches of 100, 200, 300, 400, 500 and 1000 were used to upgrade the SEC AI model. The absolute error results for RT (Figure 3) indicated the incremental improvements in the accuracy from 0.25 mins to 0.05 mins, as the respective models were trained and retrained from 100 to 2000 datasets. Interestingly, after the 400 datasets, some large absolute errors were observed above 0.1 mins to 0.4 mins, with two datasets between 0.4 to 0.55 mins. This phenomenon occurred due to the presence of datasets from the stressed profiles. It is a well-known, that stressing the antibody product introduces changes in the molecule that are reflected within the chromatographic profile. However, as these stressed profiles were further integrated into the retraining of AI model, the performance improved and 96% of the subsequent 100 datasets were within 0.1 mins, with 4 datasets extending to 0.2 mins. Thereby the AI model demonstrated the ability of the AI model to also learn the stressed profiles and accurately integrate the peaks. This feature also shows a superiority of AI in the automation of chromatographic peak integration process. Similarly, the PS/PE performance (Figure 4) showed the same phenomenon of improvement as the training datasets increased during the course of time and incorporating the evolving analytical variability. Particularly, the PS/PE 3 that is the terminal dropline showed a broad scattering window (up to 0.8 mins). PS/PE 3 is the last dropline in the peak profile, where the peak elution merges with the baseline. This region is commonly prone to the phenomenon of "Peak Tailing". There are various causative factors ranging from sample, columns, solvents and instrument that leads to the peak tailing. Also, different analytical methods differ in the peak tailing pattern and frequencies, and it is a known uncertainty that is managed by the operator in the peak integration process. Hence, peak tailing leads to a non-consistent peak integration at this region and minor shifts due to operator variability are often encountered. However, most often the contribution of the shifts does not significantly affect the quantitative results. Nevertheless, a major peak tailing shift may contribute to the differences and regulatory agencies have issued guidelines to track the peak tailing with measures. Therefore, the higher scatter of absolute error for the PS/PE 3 was a resultant of operator induced variability and the uncertain contributions from the peak tailing phenomenon. PS/PE 1 & 2 had the absolute error below 0.2 mins for the model trained on 100 runs. Similarly, when stressed sample runs were tested with the models re-trained from 400 and 500 runs, some large absolute errors were observed until 0.6 mins with some datasets around 1 min. Thus, it would be expected for these stressed profiles as they bear changes in distribution and this type of data was never seen by the model. Moreover, the performance of the peak integration process improved (all PS/PE below 0.25 mins) after re-training the model with this unique new data. Thus, the developed architecture was able to learn the historical variability of the SEC method as contributed by all the sources and efficiently performing the peak integration process.

To define an universal architecture for building models for simple to complex chromatographic profiles/methods, were perfomed variations of a small architecture with 500k parameters that were iteratively build tested and evaluated. The input layer was kept configurable, and the shape was dependent on the datasets. The preprocessed input was passed through a group of convolution layers, ReLU activation and max pooling layers. Thereby,were able to extract most important features from the input. The convolution layer consisted of 32 channels or feature maps and was the first group to extract features from the input by a linear operation. The output from the ReLU activation function was passed through the max pool convolutions to collate and filter out the most important features present. The number of neurons in the final output layer were dependent on the number of required predicted outcomes from the model. As an example, the IEX profile consists of 4 peaks corresponding to 4 retention times (RT) and 5 peak start/ peak end times (PS/PE). Hence, the final output layer (layer 22) contained 4 neurons for the model on RT outcomes, and 5 neurons for the model trained for PS/PE. Adam Optimizer with learning rate of 1e-3 was used as the optimization function. The model was run for 500 epochs with early stopping technique to avoid overfitting. Mean Squared Error was used as the loss function to train the models for peak retention times and peak start/end times. Training loss and validation loss were tracked to check the model performance during training. From the 7 architecture variants, architecture 7 was based on transfer learning and the performance was evaluated across the 3 datasets. Transfer learning is a method for applying the learning from first task to another task. This approach is generally used when the initial data for training is scarce, and there is a need for improvement in the AI performance. Transfer learning has been rapidly expanding into many applications with almost 40 representative transfer learning approaches. The transfer learning was applied by freezing convolutional layers from 2 to 13 in the initial architecture and by using previously optimized weights. Thus, the training was performed for the subsequent linear layers (16 to 22) in the latter part of the initial architecture. With this approach the features (lines, edges, change in slope at the beginning of the peak, change in slope at the end of the peak, curvature of the edges, etc) were extracted from the pre-trained SEC model, and the knowledge (weights/features from the pre-trained SEC model) was reused to train a new model for IEX and GM dataset. The evaluation of performance of these architectures showed that the best architecture consisting of initial (small architecture with 500k parameters) + 2 additional layers (1 million parameters) + 0.3 Dropout, showed superior performance. And the second best architecture was with transfer learning. The two Architectures were further evaluated on IEX dataset wherein the performance of the Architecture (without transfer learning) was found to be superior with a minor difference in accuracy. This overall good performance for the baseline architecture is due to the use of dropout technique for regularization that resulted into acceptable accuracy with less training data by preventing overfitting and allowed the AI model to perform well with new time series-acquired test data. Therefore, the best architecture was selected as a baseline architecture for further studies.

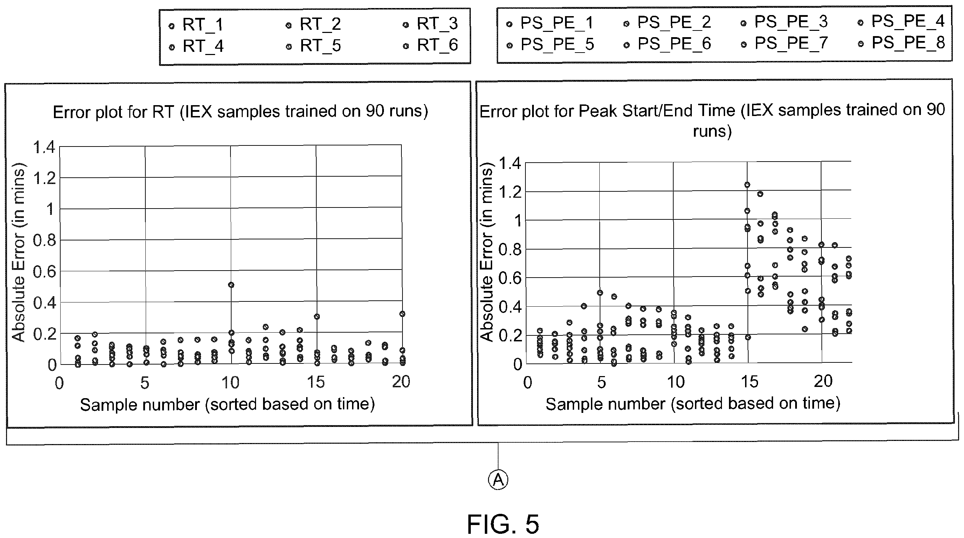

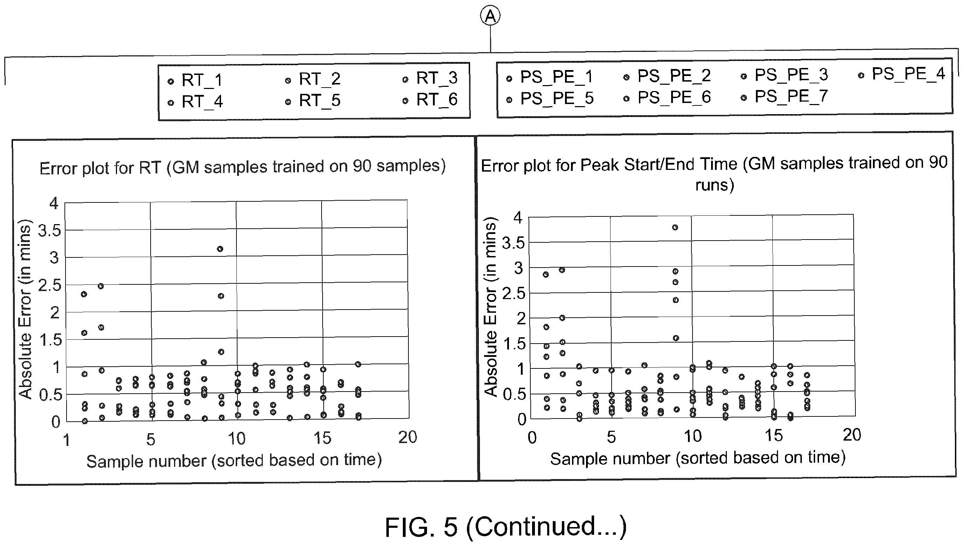

The selected baseline architecture was applied to the IEX and GM datasets, by only changing the corresponding input data (intensity vs time, retention time, peak start and end time), number of epochs and learning rate in the architecture. Indeed, the number of peaks and the start and end position for the baseline were required to be provided as user defined inputs. Using only these parameter changes the baseline architecture was applied to generate the models on IEX and GM datasets. The training set samples were selected based on the time acquired data, and the testing was performed on the subsequent data in the time series of acquisition. On the IEX model, the results (Figure 5) showed that 95 % of the test data was within the absolute error of 0.3 mins for RT, and 70% of test data was within the absolute error of 0.5 mins for the PS/PE. The rest 30% PS/PE data showed a shift in all the PS/PE droplines. This clearly indicated the analytical variability arising from a different source i.e., in this case a different laboratory, instrumentation, column, and operator. This data shows the susceptibility of the IEX chromatography runs and the degree of shifts encountered as variability. Interestingly, the RT absolute error was below 0.3 mins on the test data showing high shifts in PS/PE droplines. This is due to the integration approach in IEX chromatographic profiles, that is based on integrating the peak clusters. Nevertheless, the re-training of the IEX model needs to be performed from the test data 15th and onwards to improve the AI peak integration accuracy. For the GM model, a larger absolute error of 1.1 mins for 82% test data was observed for RT and PS/PE. Here, 18%of test data (3 runs) showed very different profile leading to the absolute error up to 3.2 min for RT, and 3.7 mins for PS/PE. These were particular cases and typically the glycan mapping chromatography profiles are known for their high sensitivity and variability. In such cases, a user defined mitigation would be required. However, the current observation is only based on very less data. Re-training the GM model with more data capturing such instances would show a promise to learn these variations and apply them on the future data. Thus, these results sufficiently demonstrated the ease of adaptability of this baseline architecture to other new methods or profiles without the need for advanced IT expertise. The baseline architecture can be easily applied to other chromatographic profiles that are higher in the number or peaks, complexity and sensitivity to analytical variations: However, only 90 or 100 initial training data may not provide the desired level of accuracy. There appears a tradeoff between the data and the performance, which also extends as per the complexity of the chromatography profile and method.

The AI models are built from the training data and validated on the test data. The validation of the models defines its performance in terms of its quality. Therefore, the CBA: Definition of criteria on model management and performance monitoring has a high relevance for the use of AI models in the routine. Performance of the machine learning models is calculated by the comparison of the trained model predictions with the actual observed value. There are number of mathematical approaches to evaluate the regression model validity. Root-mean-square error (RMSE) is a frequently reported metrics in the literature and is a function of 3 characteristic set of errors. Meanwhile, mean absolute error (MAE) is unambiguous than RMSE, and can provide dimensioned evaluations for inter-comparisons. We have used MAE (mean absolute error) to evaluate the performance of the trained model, and its predictive power on the test data as the model validation approach during the model optimization studies and baseline architecture development. Within our application, MAE reports the outcome as "minutes" or "%", allowing ease of interpretation for the users. Additionally, mean squared error (MSE) is used as a loss function for training the model. For the routine use, the metrics need to be interpretable by operators to define and take subsequent actions. For the evaluation of the peak integration process as executed by the model, the max absolute error provided a better interpretation on the performance as tested on the time series acquired test data. The RT accuracy on 90% of test data was at 0.2 min for SEC, IEX and 1 min for GM; and for PS/PE the absolute error values were 0.4, 0.8 & 1.3 mins for SEC, IEX and GM respectively. These indicate the maximum absolute errors and do not account for the outliers or provide a better understanding to define the actions. Therefore, we have adopted the absolute errors as a scatter plot, showing the performance of each test data. This provides a greater visibility on the model performance to identify outliers or changes due to analytical method variability in order to provide a decision on the re-training of the AI model. The benchmark of accuracy was a user defined input, based on the scientific experience on the analytical methods and their variability. During the training and retraining of the AI model, the accuracy was evaluated as per the user set threshold for RT and PS/PE mins. The performance evaluation was performed at two levels, first using the ground truth data that is the operator integrated profiles from the Empower (extracted from the reports) was used to calculate the absolute error. Then, at the level 2, the AI integrated profiles were checked by an operator. This was needed to bring Human-in-the-loop for ensuring the performance of such black box based deep learning models. This is aligned to the current non-Al peak integration process, where the final evaluation is done with visual inspection to confirm that the peaks are properly integrated and avoiding any effects related to skimming or enhancing. Thus, design of the peak integration process in the application was performed, to provide roles for the system and humans in the decision making during the process. (Human in the loop). Although, there are similar metrics to monitor the outcome (in our case relative % distribution) of the peak integration process. The outcome (relative percentage value) has the dependency on the PS/PE and RT, as a calculation that is performed from the integrated peak area. Therefore, RT and PS/PE metrics were used mainly to monitor and evaluate the model performance along with the visual inspection of the AI integrated peak profiles. This was the approach adopted in the model training and validation on the test data, as selected from the time acquired sequence. In the routine use of peak integration with AI model, the ground truth information does not exist. In this case the performance monitoring of the deployed model was assessed by visual inspections of the operators and mitigated accordingly. We have incorporated the User Interface features to allow the visualization of the AI peak integrated profile to the operators, and corrections to the droplines, and baseline start, and end can be performed. Thus, incorporating the audit trailed manual management of integration process for the outliers or faulty peak integrations. The operator actions towards the mitigation/corrections are fully tracked by the audit trail component of the application.

The guiding principles on the Good Machine Learning Practice (GMLP) are jointly identified by U.S. Food and Drug Administration (FDA), Health Canada (HC), and U.K. Medicines and Healthcare products Regulatory Agency (MHRA), to promote the use of Artificial Intelligence/Machine Learning (AI/ML)-Based Software as a Medical Device (SaMD) for the delivery of safe and effective software functionality that improves the quality of patient care. Through a discussion paper, a proposed mechanism of total product lifecycle (TPLC) regulatory framework was illustrated for embracing the iterative improvement power of AI/ML SaMD. Concepts of GMLP, Predetermined Change Control Plan, and Algorithm Change Protocol (ACP) are introduced for engaging a dialogue with the manufacturers to describe harmonized standards and AI/ML best practices, through a consensus and community driven regulatory oversight. Similarly, Informal Network for Innovation was set-up by International Coalition of Medicines Regulatory Authorities (ICMRA) to adapt regulatory frameworks on the emerging new technologies, in order to facilitate safe and timely access to innovative medicines. The working group members in the Informal Network for Innovation consisted of Italian Medicines Agency (AIFA), Danish Medicines Agency (DKMA), European Medicines Agency (EMA) (working group lead), U.S. Food and Drug Administration (FDA) (as observer), Health Canada (HC), Irish Health Products Regulatory Authority (HPRA), Swissmedic and the World Health Organization (WHO). Within the ICMRA Al working group, horizon scanning exercise was conducted to identify challenging topics of relevance for regulators and stakeholders on the use of AI. Hypothetical case studies on Al were defined to challenge the existing regulatory frameworks and develop recommendations for the adoptions - indicating a need for a risk-based approach through collaborative exchange with ICMRA, linking of the Al model governance structures with the benefit/risk of the medicinal product, and providing the regulatory access to Al models and its dependent data sets, to foster sufficient understanding for the validity of the Al algorithms.

Following the recommendations, we have defined a proposed GxP framework for our Al application that is adapted from the FDA TPLC approach, guiding principles on GMLP, ICMRA Al recommendations, and the existing guidelines on data integrity, 21 CFR part 11 etc. Thus, building the application in adherence to GAMP5, FDA 21 CFR Part 11, ensuring compliance, auditability, traceability and data integrity. Application features were built using the AWS physical infrastructure, virtualization, and service layers. AWS does not possess a specific GxP certification for its cloud products and services. However, AWS provides commercial off-the-shelf (COTS) IT services according to IT security and quality certifications such as ISO 9001, ISO 27001, ISO 27017, and ISO 27018, and is compliant with NIST 800-53 under the FedRAMP compliance program. The process of the current invention adheres to the industry guidance given by FDA's Part 11/Title 21 of CFR (Code of Federal Regulations) by incorporating the features of LDAP based authentication, password policy as per the IdP guidelines, role-based access, viewing and maintenance of Audit trail and Application logs, export of logs for review and distribution. Furthermore, additional features according to GxP requirements were incorporated as access over secured layer (SSL), patch management, anti-virus management, encryption and back-up and disaster recovery. Application was developed in AWS with Good Engineering Practices as recommended by GAMPS lifecycle approach.

The architecture of the current invention consists of a modular set-up having a presentation layer for providing the access through the user interface for operators to manage and execute the functional operations. The seamless connectivity was established with Rest APIs to integrate the business layer consisting of logics towards the application management, and data services management, which was connected to a data layer. A data science layer incorporating the AI algorithms was integrated with the business layer. The application was developed in a modular format to allow independent upgrading of the modules for its broader applicability and extension. Once the access to the application has been established according to the authentication and policies, the first step involves the creation of a "Project - Session" and identifiers are assigned by the data management logics. Third party exported files representing the chromatographic profiles are imported into the application by the input module. For our use case, the import logics have been designed to work with Waters Empower export formats *.arw and *.cdf files as raw data (chromatography profiles) and °.pdf files for the processed results. Additional import logics can be coded to extend the interoperability of the application with other chromatography software vendors. Input module performs a data import validity check to confirm consistency of the data and extracts the standardized information to align with the raw data management logics with the assignment of unique identifiers for each imported dataset. Input module also links the third party processed results with the raw data, which is used as ground truth for training the models. The model management module is used to create a new or to retrain an existing model. It requires the selection of the available baseline architecture and the corresponding training data along with the only parameters "number of epochs" and "learning rate" in the architecture. A universal architecture is built in the application to train a deep learning model that can be applied to any kind of chromatographic profiles with different complexities emerging from different analytical methods. Flexibility is provided to set models for "n" number of peaks and baselines. Thus, even a user with non-developer IT skills can construct models from scratch. The model management further encompasses the model performance dashboard and connects with the human in the loop for operators to review and validate the trained model. This feature provides granularity of information related to the peak integration visuals, data variability within the training set, accuracy of model on test data and model performance metrics. Hence, allows a high level of transparency to build trust and confidence for the trained model. To foster data integrity within the application, the model management module provides traceability on the training data used to train and retrain the models, along with the track of versioning with unique identifiers. These details can be retrospected at any point of time. The final trained model as deployed for routine use, ingests the raw data files as managed from the data management module. The deep learning model facilitates the chromatographic peak integration process by predicting retention time, peak start time and peak end time to identify the peaks and draw droplines, that are processed further with scripts to create baseline and calculates area under the peak to provide results. A human in the loop module is provided to inspect the integrated profiles and if needed to initiate manual correction under a tracked workflow fostering data integrity principles. Finally, the results are managed within the data management module with unique identifiers.

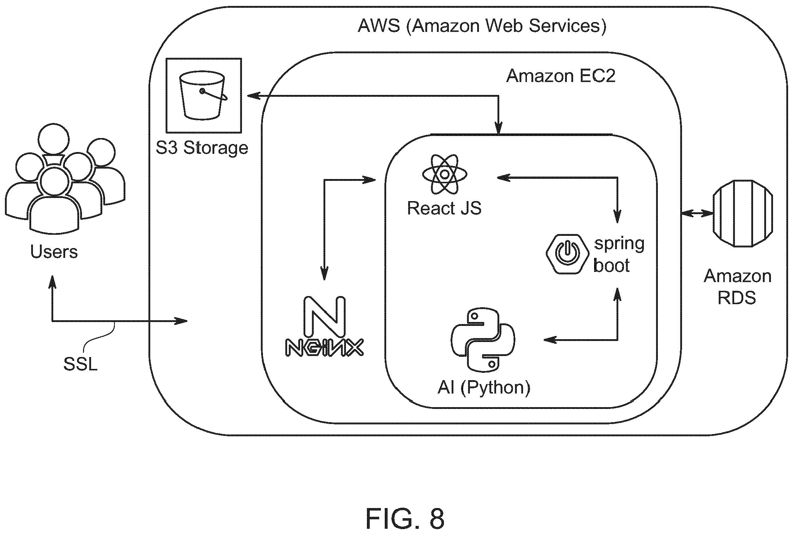

With respect to a User Interface (Ul), as also described in figure 8, a modular software application was built on a scalable and open architecture system comprising of independent User Interface (Ul) module built on Java technology stack with Sprint-boot, and Algorithm module built on Python. These modules were integrated with REST APIs to allow seamless exchange within the internal services and the application was hosted in AWS cloud environment. UI module provided the accessibility of the users to the application by modern browsers (Chrome, Microsoft Explorer, Firefox etc), that was built using SSL (Secure Sockets Layer) technology. The access was permitted through internet-facing URL and accessible to geo-fenced locations/countries. The authentication of users was enabled with SAML 2.0 (Security Assertion Markup Language 2.0) and SSO (Single-Sign-On) based access management. Authorization of the users was set to be authenticated by the IdP (Identity Provider) and OAuth (Open Authorization). A root administrator was set to provide access to limited and required user base by prior configuring their unique identification information (Id and email). User Interfaces within the application were built using React JS covering the functionalities of file upload from browser, Ul-based validations, display of results and reports. Data management and organization within the entire application was built on MySQL (Amazon RDS) as the database. Upload of the raw data files *.cdf, *.arw and *.pdf formats was built and managed with Java/J2EE and Spring Boot as middleware. Scripts were set to check on data conformity of the uploaded files before importing them into the application. Amazon Elastic Compute Cloud (Amazon EC2) was used for building the Web application hosting, back-up and recovery. Storage of source data on application logs, model training and predictions was built using the AWS S3 (Simple Storage Service). The developed baseline architecture was deployed within the algorithm module using python as the programming language. This contained the Artificial Intelligence, Machine learning and Neural network-based logic and services. NGINX was used for Web Server and Load balancing.

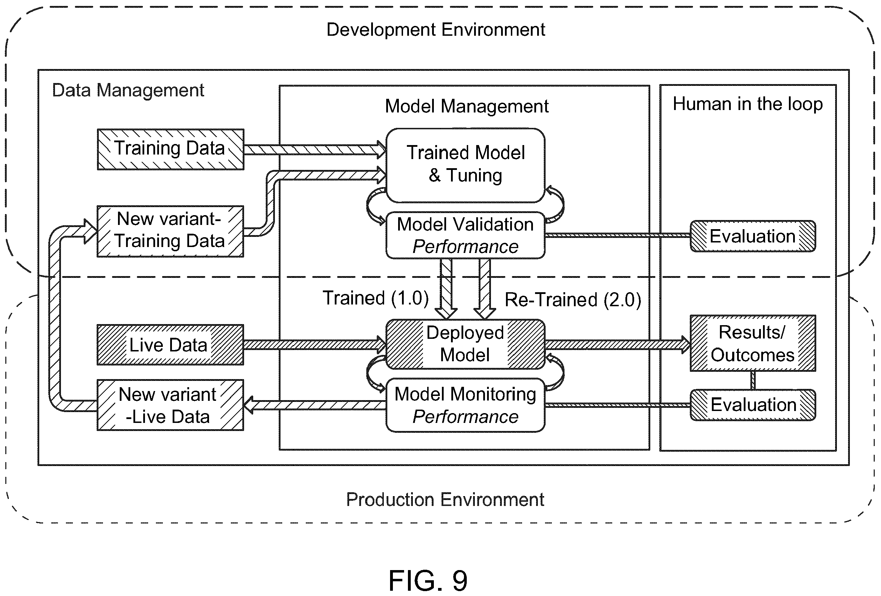

A GxP framework can be built on 3 main pillars as Data Management, Model Management and Human-in-the-loop as shown in Figure 9. These elements may also address the regulatory expectations and to develop a system that can be trusted by the operators. Data Management is overarching the pillars of Model Management and Human-in-the-loop, allowing a seamless exchange between the system and the humans with transparency for determining the validity and trust towards the AI models. Based on the data the decision-making can be successfully undertaken and trust can be introduced on the performance of the AI models. Particularly, such set-up designed for the GxP framework consists of a well-organized data management to track and trace the training data that were used to build models. Furthermore, the performance metrics associated with the models are also elaborated to show granularity of information on the model accuracy and validity. Particularly, the model management dashboard in the UI provides metrics related to the intrinsic variability in the training data, scatter plots on the model performance with test data and model accuracy range. This high level of granularity and tracking will enable the confidence of operators and regulators to trust the AI application in the healthcare sector.

### Examples:

Three datasets belonging to different chromatographic profiles from the analytical methods - size exclusion chromatography (SEC), ion exchange chromatography (IEX) and glycan mapping (GM) were used in the study.

**Table 1: Datasets**

| | **SEC** | **IEX** | **GM** |
|---|---|---|---|
| Number of peaks | 2 | 6 | 6 |
| Date Range | 25 months | 19 months | 2 months |
| Number of samples | 1550 | 112 | 122 |
| Complexity | Simple | Medium | Complex |
| Training Set | 100 | 80 | 90 |
| Validation Set | 50 | 10 | 15 |
| Test Set | 100 | 22 | 17 |

The respective chromatographic profiles for the analytical techniques (SEC, IEX, GM) were exported from the Waters Empower Software. The raw data and their operator processed reports from Empower were exported using the available export functionality of the software. The exported files consisted of three filetypes identified from the extension as *.arw that consisted of retention time and intensity information of the chromatographic run, and *.cdf files that contained the metadata of the acquired run i.e. "Date acquired", "Retention Time", "Area", "Percentage Area", etc. The file names for the *.arw and *.cdf files were identical. However, the results from the operator processed data of Empower were present in the reports as °.pdf files bearing a different file name. These files contained the results of the corresponding chromatographic profile and consisted of information as "Sample Name", "Date acquired", "Retention time", "peak start and end times", "slope", "Area", "% Area" for each peak observed in the profile. The raw chromatographic data was represented by ^{∗}.arw and ^{∗}.cdf files and the processed results were represented by °.pdf files. Differences between the naming were due to the different set of records as stored within the Empower software. Therefore, automated scripts based on text extraction and natural language processing (NLP) were used to match the raw data with their corresponding results by using a common information variable "Date acquired" that was present in both ^{∗}.cdf and °.pdf files. Furthermore, scripts were used to check the presence of necessary information in the results data °.pdf files to ensure that there were no missing peaks, and the information on the results is consistent across the datasets. Additionally, each *.arw file was checked for the number of data points/sec and the end time. The files with non-consistent data were removed. Thus, the exported data files were aligned and standardized as input files for the deep learning model construction. The input files were subjected to scaling (between 0 to 1) for better results.

Each chromatographic run consisted of time series data aligned to its intensity values recorded for at a frequency of 1 sec. These values were converted into a square matrix for feeding into the deep learning model. All the values were normalized using mean and standard deviation of the training set for easier gradient calculation in the back propagation of the deep learning model. This allowed a faster convergence of the loss function and rapid training of the neural network model. Result values from the °.pdf files were used as ground truth to train the deep learning model.

A deep learning approach was explored to develop an artificial intelligence-based algorithm. The models were developed using Pytorch, along with other libraries as numpy, scikit-learn, pandas, matplotlib etc. A convoluted neural network (CNN) model was constructed to predict the retention time, peak start time, peak end time of the chromatographic profiles. The baseline was constructed by joining the predicted peak start time and predicted peak end time using a straight line. The equation of the line was generated using the two points (predicted peak start and predicted peak end).

CNN model was built on a 22-layer architecture composed of concatenating individual blocks as convolution layers, and rectified linear unit (ReLU) as activation function. ReLU activation function was chosen to prevent vanishing gradient problem, and to learn from non-linear relationship between the layers. A ReLU activation function allowed to filter out non-relevant features by zeroing them out, and was defined as R(z) = max(0, z). ReLU was interspersed with max pooling layers prior to dropout, fully connected layers and comprised of dense output layers. Overall architecture set-up comprised of 4 convolutional layers with increasing number of channels in each layer, 4 max pooling layers after each convolution layer were used to reduce the number of parameters to be trained, along with 1 flatten layer, 1 dropout layer at the end to eliminate the overfitting, 3 dense layers with reducing number of neurons such as 512, 256, 128 and finally 1 output layer with the defined number of outputs. CNN model was optimized with several iterations by varying the hyper parameters as learning rate, loss function, activation functions, number of layers, number of epochs, batch size, dropout layers etc. to optimize the accuracy as evaluated from the loss value i.e., error between the predicted value and the ground truth. The operator integrated profiles from the results file of the exported Empower dataset were considered as ground truth. The features of the input data were extracted by the convolution operation in the CNN model by passing a weight matrix with kernel filter of size 3. The four convolution blocks were connected with different number of channels to extract more deeper features. Each convolution layer was followed by a ReLU Activation function and Max pooling layer operating in tandem to extract only the features that provide the best output, and it was learned by backpropagation through the adjustment of kernels weights. Back propagation was iteratively performed with adam optimizer with a learning rate of 1e-3, to update the kernel weights by using the gradient of the weights with respect to the output and its loss value for learning the patterns in the data and improving the accuracy. The max-pooling kernel convolved on a channel to provide the max value from the convolving regions. The convolution block was followed by 3 blocks of fully connected or dense layers for a deeper learning with mix and matching of features as learned in the convolution blocks. A dropout layer was included between the convolution blocks and dense layers, and a drop out value was generated between 0 and 1, for randomly dropping some of the neurons in the fully connected layer to avoid overfitting to the training data. Batch normalization was not included in the model architecture as the model is not deep and good results were obtained even without batch normalization.

The model training was performed using two data organization approaches i.e., random data selection was used to train a model with fixed seed having the data split ratio of 80% training, 10% validation and 10% testing. The second approach consisted the use of acquisition time aligned data selection with a rolling window of incremental batches of samples to train and re-train. The training set was incrementally increased with 100, 200, 300, 400, 1000 etc, while the test set was fixed at 100 samples in the subsequent data acquisition series having the most recent samples. The trained model performance was evaluated from the Mean Absolute Error.

Several architecture types were explored by iteratively building, testing, and optimizing the hyper parameters as indicated in Table 2. The performance of the different architectures was evaluated from the individual models prepared from the respective 3 datasets (Table 1). Further, separate models were developed using these architecture types for detecting peak retention time and peak start/end time using 684,164 trainable parameters in the model. Transfer learning was explored by freezing convolutional layers in the baseline architecture and using the weights of the previously trained model. The training was performed within the linear layers present in the latter part of the baseline architecture with 296,288 as the total number of trainable parameters in the model (Table 2).

**Table 2: Parameters of baseline architecture**

| **No.** | **Layer** | **Description** | **Number of Trainable parameters in Baseline architecture** | **Trainable Parameters in Transfer Learning** |
|---|---|---|---|---|
| 1 | Input Layer | 1 X 56 X 56 input array | | |
| 2 | Convolutional | 3 X 3 convolutions of 32 channels, 0 padding and 1 stride | 320 | 0 |
| 3 | ReLU | Rectified Linear Unit activation function | 0 | 0 |
| 4 | Max Pooling | Max pool layer of 2X2 convolution, 0 padding and 2 stride | 0 | 0 |
| 5 | Convolutional | 3 × 3 convolutions of 64 channels, 0 padding and 1 stride | 18496 | 0 |
| 6 | ReLU | Rectified Linear Unit activation function | 0 | 0 |
| 7 | Max Pooling | Max pool layer of 2×2 convolution, 0 padding and 2 stride | 0 | 0 |
| 8 | Convolutional | 3 × 3 convolutions of 128 channels, 0 padding and 1 stride | 73,856 | 0 |
| 9 | ReLU | Rectified Linear Unit activation function | 0 | 0 |
| 10 | Max Pooling | Max pool layer of 2X2 convolution, 0 padding and 2 stride | 0 | 0 |
| 11 | Convolutional | 3 X 3 convolutions of 256 channels, 0 padding and 1 stride | 295,168 | 0 |
| 12 | ReLU | Rectified Linear Unit activation function | 0 | 0 |
| 13 | Max Pooling | Max pool layer of 2X2 convolution, 0 padding and 2 stride | 0 | 0 |
| 14 | Flatten | Flatten Convolution features to Linear | 0 | 0 |
| 15 | Dropout | Dropout of 20% | 0 | 0 |
| 16 | Linear | 512 neurons | 131,584 | 131,584 |
| 17 | ReLU | Rectified Linear Unit activation function | 0 | 0 |
| 18 | Linear | 256 neurons | 131,328 | 131,328 |
| 19 | ReLU | Rectified Linear Unit activation function | 0 | 0 |
| 20 | Linear | 128 neurons | 32,896 | 32,896 |
| 21 | ReLU | Rectified Linear Unit activation function | 0 | 0 |
| 22 | Linear | Regression output (1X4) | 516 | 516 |

## Claims

1. A computer implemented method for analyzing data to determine peak characteristics for a sample analytical data set, comprising:
a. processing one or more analytical data sets having at least an x-axis and a y-axis to identify peak characteristics,
b. storing the peak characteristics in a database,
c. generating a trained model for the analytical method based on the stored peak characteristics,
d. applying the trained model to the sample analytical data set to obtain a predicted retention time, peak start time, and peak end time,
e. managing raw data files, model training data, and results with unique identifiers in a data management module,
f. managing model training and performance data with unique identifiers in a model management module,
g. outputting the peak characteristics in the form of values in table and visual representation by a graph or profile,
h. providing a means to inspect the integrated profiles and provide user correction under a tracked workflow,
i. identifying the peaks and draw droplines, and
j. outputting the peak characteristics.

2. The computer implemented method of claim 1, wherein step b) comprises;
a. retrieving analytical data for 1 + q dimensions for p data sets obtained using the same analytical method,
b. extracting the analytical data in 1 dimensional signal data for each data set,
c. converting the 1-dimensional signal data into 2-dimensional array with n channels wherein the 2-dimensional array is in the form of a matrix,
d. normalizing the 2-dimensional array with n-channels which normalized 2-dimensional array with n-channels is collected in a database, and
e. identifying for a single data set the number of peaks in the analytical data and for each peak the peak value, start peak value and end peak value,
wherein p and q are integers equal or larger than 0 and wherein 1 + q is less than p.

3. The method according to claim 1 or 2, wherein the identified peaks and peak value, start peak value and end peak value are imported into a database.

4. The method according to any preceding claims, wherein the trained model is stored in a database.

5. The method according to claim 2, wherein the trained model is further trained comprising:
a. applying steps from claim 2, a) to e) to one or more additional analytical data sets obtained using the same analytical method,
b. combining the value for number of peaks in the additional analytical data sets, the peak values, start peak values and end peak values with the value for number of peaks in the analytical data sets, the peak values, start peak values and end peak values obtained in step e), and
c. generating a trained model from the combined results.

6. A computer implemented method for determining peak characteristics of analytical data obtained for a sample in a sample data set comprising:
a. retrieving analytical data for 1 + q dimensions for p data sets obtained using the same analytical method as the sample data set for the sample,
b. extracting the analytical data in 1 dimensional signal data for each data set,
c. converting the 1-dimensional signal data into 2-dimensional array with n channels wherein the 2-dimensional array is in the form of a matrix,
d. normalizing the 2-dimensional array with n-channels which normalized 2-dimensional array with n-channels is collected in a database,
e. identifying the number of peaks in the analytical data (per data set) and for each peak the peak value, start peak value and end peak value,
f. generating a trained model for the analytical method based on steps from claim 2, d and e,
g. extracting the analytical data in 1 dimensional signal data for the sample data set,
h. converting the 1 dimensional signal data from the signal data set into a 2-dimensional array with n channels,
i. normalizing the 2-dimensional array with n-channels of the sample set,
j. applying the trained model on the normalized 2-dimensional array of the sample set, and
k. identify for each peak in the sample data set the peak value, start peak value and end peak value.

7. The method of any of preceding claim, wherein the one or more analytical data sets and the sample analytical data set are obtained by a chromatographic analytical method.

8. The method of any preceding claim, wherein the analytical data is represented by a graphical representation.

9. The method of claim 8, wherein the graphical representation is a chromatogram or peak profile.

10. The method of any of claims 2 to 9, wherein the 2-dimensional array is in the form of a square matrix.

11. The method of any of claims 6 to 10, wherein the features (value for the number of peaks, peak values, start peak value and end peak value) obtained in step claim 7 k) are compared to the features obtained in step claim 7 e) and assign a similarity score for each obtained feature, and wherein the sample data set is either accepted when the similarity score for each feature is within a predetermined threshold range or rejected when the similarity score for each feature is outside the predetermined threshold range.

12. The method of claim 11, wherein the sample is an analytical sample for batch release.

13. The method of any of claims 6 to 12, wherein the identified features (value for number of peaks, peak value, start peak value and end peak value) are graphically represented.

14. A method for determining and quantifying the presence of an analyte in a sample, the method comprising:
a. obtain a sample containing at least one analyte,
b. submit the sample to an analytical method to obtain a sample data set,
c. determine peak characteristics of the sample data set according to any one of claims 6 to 13,
d. correlate one or more peaks with the one or more analytes in the sample,
e. for each correlated peak identify the droplines over a threshold from the baseline or base line value, the peak start and peak end values,
f. calculate the area for each correlated peak, and
g. determine the presence and quantify of each analyte in the sample when correlated to each correlated peak and area under the correlated peak.

15. A computer system for implementing the methods of claims 1 to 14, comprising:
a. a presentation layer providing access to a user interface for operators to manage and execute functional operations,
b. a business layer comprising logics for application management and data services management, connected to a data science layer, and
c. a data science layer incorporating algorithms for generating a trained model, integrated with the business layer.

16. The method of claim 15, wherein the computer system is in a modular format allowing independent upgrading of modules.

17. The computer system of claim 15 or 16, further comprising:
a. an input module for importing third party exported files representing chromatographic profiles and processed reports, and performing a data import validity check to confirm consistency of the data.

18. The computer system of claim 16, further comprising:
a. an input module for importing third party exported files representing chromatographic profiles and processed reports, and performing a data import validity check to confirm consistency of the data.
b. a model management module for creating or retraining a model, selecting a baseline architecture and corresponding training data, and providing a model performance dashboard,
c. a means for operators to review and validate the trained model, and
d. a data management module for managing raw data files, model training data, and results with unique identifiers.

19. A computer implemented method, the method using the computer system of claims 15 to 18 for analyzing a sample analytical data set comprising;
a. accessing the computer system through a presentation layer,
b. creating a project session and assigning identifiers through data management logics,
c. importing third party exported files representing chromatographic profiles and processed reports through an input module,
d. creating or retraining a model through a model management module,
e. deploying the trained model to ingest raw data files and perform peak integration,
f. inspecting integrated profiles and initiating manual correction, and
g. managing raw data files, model training data, and results with unique identifiers through a data management module.

20. A computer implemented method for determining a predetermined sample characteristic comprising;
a. determining peak characteristics for a sample analytical data set according to the method of any one of claims 1-14 and 19,
b. comparing the peak characteristics of step a) to peak characteristics of a reference standard analytical data set, and
c. determine the predetermined sample characteristic for the sample analytical data set,
wherein the predetermined sample characteristic for the sample analytical data set is selected from i) the presence of an analyte in a sample, ii) a value determining the concentration or value of an analyte, iii) the presence of an analyte in a sample to diagnose a medical condition, iv) a value determining the purity of a sample substance, v) peak characteristics to monitor and control a manufacturing process, vi) peak characteristics for digitalization in real-time release testing, automated quality control, process analytics and continuous manufacturing, and vii) a variability predictor to augment accuracies of the trained model or processing operations.
